# EUROPÄISCHE PATENTANMELDUNG

(11) **EP 3 875 004 A1**
(43) Veröffentlichungstag der Anmeldung: **08.09.2021**
(21) Anmeldenummer: 20161438.5
(22) Anmeldetag: 06.03.2020
(51) Int. Cl.: A47J 36/10, A47J 43/07, A47J 27/08

(54) **ZUBEREITUNGSGEFÄSS MIT EINER VERRIEGELUNGSEINRICHTUNG**

(71) Anmelder: Vorwerk & Co. Interholding GmbH, 42275 Wuppertal (DE)
(72) Erfinder: Jansen, Sebastian, 44803 Bochum (DE)
(74) Vertreter: Müller, Enno

(57) **Zusammenfassung**

Die Erfindung betrifft ein Zubereitungsgefäß (1) zum Verbinden mit einem Aufnahmebereich (2) eines Basisgerätes (3) einer elektromotorisch betriebenen Küchenmaschine (4), wobei das Zubereitungsgefäß (1) einen Topf (5), einen mit dem Aufnahmebereich (2) verbindbaren Topffuß (6) und einen eine Topföffnung (7) des Topfes (5) verschließenden Deckel (8) aufweist. Um ein Zubereitungsgefäß (1) zu schaffen, dessen Topf einerseits mit einem Deckel (8) verriegelbar ist, und das andererseits unabhängig von einer Aufbauhöhe des Zubereitungsgefäßes (1) mit dem Basisgerät (3) der Küchenmaschine (4) verbindbar ist, wird vorgeschlagen, dass das Zubereitungsgefäß (1) eine Verriegelungseinrichtung (9) zum Verriegeln des Topfes (5) mit dem Deckel (8) aufweist, wobei die Verriegelungseinrichtung (9) eine Rotationswelle (10) mit einer ersten Kröpfung (11) aufweist, an welcher ein durch Rotation der Rotationswelle (10) auf und ab verlagerbares Verriegelungselement (12) gelagert und zu der Topföffnung (7) geführt ist.

## Beschreibung

### Gebiet der Technik

Die Erfindung betrifft ein Zubereitungsgefäß zum Verbinden mit einem Aufnahmebereich eines Basisgerätes einer elektromotorisch betriebenen Küchenmaschine, wobei das Zubereitungsgefäß einen Topf, einen mit dem Aufnahmebereich verbindbaren Topffuß und einen eine Topföffnung des Topfes verschließenden Deckel aufweist.

Des Weiteren betrifft die Erfindung eine elektromotorisch betriebene Küchenmaschine, insbesondere ein Mixgerät, mit einem Basisgerät und einem mit einem Aufnahmebereich des Basisgerätes verbindbaren Zubereitungsgefäß, welches einen Topf und einen eine Topföffnung verschließenden Deckel aufweist.

### Stand der Technik

Zubereitungsgefäße und Küchenmaschinen mit einem Zubereitungsgefäß sind im Stand der Technik bekannt. Das Gehäuse der Küchenmaschine kann beispielsweise einen Gefäßaufnahmebereich ausweisen, in welchen das Zubereitungsgefäß einsetzbar ist, wobei der Gefäßaufnahmebereich vorzugsweise zumindest bezogen auf einen Teilbereich formkorrespondierend zu dem Zubereitungsgefäß so ausgebildet ist, dass das Zubereitungsgefäß im Zuge des Verbindens mit dem Gefäßaufnahmebereich sowohl in Bezug auf eine vertikale Richtung, als auch in Bezug auf eine Umfangsrichtung des Zubereitungsgefäßes ausgerichtet werden kann.

In dem Aufnahmebereich kann des Weiteren beispielsweise eine Antriebswelle angeordnet sein, welche zum Antrieb eines sich in dem Zubereitungsgefäß befindenden Rührwerkes dient. Das Rührwerk wird zur Zubereitung von Speisen über einen küchenmaschinenseitigen Elektromotor angetrieben. Um bei einem Betrieb der Küchenmaschine, insbesondere des Rührwerkes, ein Herausspritzen von Lebensmitteln aus dem Zubereitungsgefäß zu vermeiden beziehungsweise ein Hineingreifen eines Nutzers in das Zubereitungsgefäß zu verhindern, weist das Zubereitungsgefäß einen Deckel auf, welcher mittels einer Verriegelungseinrichtung auf dem Topf des Zubereitungsgefäßes verriegelbar ist.

Eine im Stand der Technik bekannte Küchenmaschine mit einer Verriegelungseinrichtung für den Deckel des Zubereitungsgefäßes zeigt beispielsweise die Patentschrift EP 2 813 165 B1. Die Verriegelungseinrichtung ist an dem Basisgerät der Küchenmaschine ausgebildet und weist zwei über einen Topfrand sowie Deckelrand greifende Verriegelungsteile auf, die als um eine im Wesentlichen horizontale Achse rotierende Verriegelungswalzen ausgebildet sind. Die Verriegelungswalzen können von einer Freigabestellung in eine Verriegelungsstellung und umgekehrt rotiert werden.

Obwohl sich die vorgenannte Verriegelungseinrichtung zur sicheren Verriegelung des Deckels auf dem Topf bewährt hat, ist diese Ausbildung daran gebunden, dass ein bestimmtes Zubereitungsgefäß mit dem Basisgerät der Küchenmaschine verwendet wird, nämlich ein Zubereitungsgefäß, dessen Höhe zu der Höhe der Verriegelungswalzen an dem Basisgerät korrespondiert. Dadurch ist es gegebenenfalls nicht möglich, verschiedene Zubereitungsgefäße in Verbindung mit der Küchenmaschine zu benutzen, insbesondere Zubereitungsgefäße mit unterschiedlichen Höhen.

### Zusammenfassung der Erfindung

Ausgehend von dem vorgenannten Stand der Technik ist es daher Aufgabe der Erfindung, ein Zubereitungsgefäß für eine Küchenmaschine zu schaffen, welches einerseits eine Verriegelung des Deckels mit dem Topf ermöglicht, und andererseits unabhängig von einer Aufbauhöhe des Zubereitungsgefäßes mit einem Basisgerät der Küchenmaschine verbindbar ist.

Zur Lösung der vorgenannten Aufgabe wird vorgeschlagen, dass das Zubereitungsgefäß eine Verriegelungseinrichtung zum Verriegeln des Topfes mit dem Deckel aufweist, wobei die Verriegelungseinrichtung eine Rotationswelle mit einer ersten Kröpfung aufweist, an welcher ein durch Rotation der Rotationswelle auf und ab verlagerbares Verriegelungselement gelagert und zu der Topföffnung geführt ist.

Erfindungsgemäß befindet sich die Verriegelungseinrichtung, die dem Verriegeln des Deckels mit dem Topf dient, an dem Zubereitungsgefäß selbst. Damit erübrigt sich eine an der Küchenmaschine ausgebildete Verriegelungseinrichtung, welche zur ordnungsgemäßen Verriegelungsfunktion eine bestimmte Geometrie, insbesondere Höhe, des Zubereitungsgefäßes voraussetzen würde. Vorzugsweise befindet sich die Verriegelungseinrichtung in dem Topffuß des Zubereitungsgefäßes, nämlich unterseitig an dem Topf, so dass diese bei Verbinden des Zubereitungsgefäßes mit dem Aufnahmebereich des Basisgerätes in Wirkverbindung mit einer Antriebseinrichtung der küchenmaschinenseitigen Betätigungseinrichtung kommt. Das Zubereitungsgefäß weist mindestens eine Verriegelungseinrichtung auf. Beispielsweise ist es auch möglich, dass zwei oder mehr Verriegelungseinrichtungen unterschiedlichen Umfangsabschnitten entlang der Umfangsrichtung der Topföffnung des Zubereitungsgefäßes zugeordnet sind. Jede der Verriegelungseinrichtungen kann dabei eine eigene Rotationswelle aufweisen. Ebenso ist es möglich, dass zwei oder mehr Verriegelungseinrichtungen von derselben Rotationswelle Gebrauch machen. Bei einem symmetrisch ausgebildeten Topf kann es beispielsweise bevorzugt sein, je eine Verriegelungseinrichtung an gegenüberliegenden Umfangsabschnitten der Topföffnung auszubilden. Des Weiteren kann jeder von mehreren Rotationswellen des Zubereitungsgefäßes in dem Basisgerät der Küchenmaschine eine eigene Betätigungseinrichtung zugeordnet sein, beispielsweise ein eigener Elektromotor zum Antrieb der jeweiligen Rotationswelle. Wesentlich im Sinne der Erfindung ist in allen Fällen jedenfalls, dass die Verriegelungseinrichtung zum Verriegeln des Deckels mit dem Topf ausschließlich dem Zubereitungsgefäß zugehörig ist und das Zubereitungsgefäß des Weiteren, insbesondere unterhalb des Topfes beziehungsweise in dem Topffuß, eine Schnittstelle aufweist, die eine Betätigung der Verriegelungseinrichtung des Zubereitungsgefäßes durch eine Betätigungseinrichtung des Basisgerätes der Küchenmaschine erlaubt. Die Schnittstelle befindet sich vorzugsweise unter dem Zubereitungsgefäß, das heißt im Bereich einer im Wesentlichen horizontalen Kontaktfläche zwischen dem Aufnahmebereich des Basisgerätes und dem Topffuß des Topfes des Zubereitungsgefäßes, so dass das Zubereitungsgefäß sehr unterschiedlich geformt sein kann, insbesondere in Bezug auf dessen Höhe und/oder Durchmesser. Eine Kompatibilität zwischen verschiedenen Zubereitungsgefäßen und dem Basisgerät der Küchenmaschine wird somit erleichtert. Die Rotationswelle der Verriegelungseinrichtung weist erfindungsgemäß eine Kröpfung auf, an welcher ein Verriegelungselement gelagert ist, das von der Rotationswelle bis zu der Topföffnung geführt ist. Unter Kröpfung wird hier jede Art von Versatz in der Längserstreckung der Rotationswelle verstanden, welcher dazu führt, dass die Rotationswelle Teilabschnitte aufweist, die außerhalb des Rotationszentrums, das heißt der Rotationsachse des Lagers der Rotationswelle, angeordnet sind. Insbesondere kann die Rotationswelle nach der Art einer Kurbelwelle ausgebildet sein. Durch diese erfindungsgemäße Ausgestaltung weist die Rotationswelle Abschnitte auf, die in Verlängerung nicht durch das Lager der Rotationswelle verlaufen, beispielsweise parallel versetzt sind zu einer Geraden, die durch das Lager verläuft. Vorzugsweise ist die Rotationswelle der Verriegelungseinrichtung so an dem Topf beziehungsweise dem Topffuß des Zubereitungsgefäßes angeordnet, dass diese im Wesentlichen horizontal orientiert ist (bei üblicher Gebrauchsorientierung des Zubereitungsgefäßes) und das von der Rotationswelle auf und ab verlagerbare Verriegelungselement orthogonal zu der Rotationsachse der Rotationswelle orientiert ist. Bei Rotation der Rotationwelle kommt es aufgrund der Ausbildung der Kröpfung zu der vorteilhaften Auf- und Ab-Verlagerung des Verriegelungselementes, das sich dadurch gleichzeitig relativ zu der Topföffnung des Topfes verlagert, nämlich sich dieser annähert beziehungsweise sich von dieser entfernt. Die Rotationsbewegung der Rotationswelle wird somit in eine lineare Verlagerungsbewegung des Verriegelungselementes umgesetzt. Das Verriegelungselement arbeitet somit nach der Art einer Schubstange (oder Pleuelstange), welche eine kreisförmige in eine lineare Bewegung transformiert.

Des Weiteren wird vorgeschlagen, dass der Verriegelungseinrichtung ein Betätigungselement zugeordnet ist, welches so an dem Topffuß angeordnet ist, dass das Betätigungselement von einer korrespondierenden Betätigungseinrichtung der Küchenmaschine betätigbar ist. Alternativ kann vorgesehen sein, dass der Topffuß eine Aussparung aufweist, in welche ein Betätigungselement des Basisgerätes der Küchenmaschine bei ordnungsgemäß mit dem Basisgerät verbundenem Zubereitungsgefäß so einbringbar ist, dass die Verriegelungseinrichtung des Zubereitungsgefäßes von dem Betätigungselement des Basisgerätes betätigbar ist. Gemäß der erstgenannten Ausführungsvariante weist der Topffuß des Zubereitungsgefäßes selbst ein Betätigungselement auf, welches eine mechanische Kraft auf die Verriegelungseinrichtung ausübt. Beispielsweise kann das Betätigungselement ein Kupplungselement der Rotationswelle sein, welche mit einem entsprechenden Kupplungselement der Betätigungseinrichtung der Küchenmaschine verbindbar ist. Somit kann die Rotationswelle über korrespondierende Kupplungselemente von Basisgerät und Zubereitungsgefäß mittels der Betätigungseinrichtung der Küchenmaschine angetrieben werden. Alternativ kann, gemäß der zweitgenannten Alternative, auch vorgesehen sein, dass das Zubereitungsgefäß lediglich die Verriegelungseinrichtung, nämlich das Verriegelungselement und die mit diesem verbundene Rotationswelle, bereitstellt und das Betätigungselement zur Betätigung der Verriegelungseinrichtung dem Basisgerät der Küchenmaschine zugehörig ist. In diesem Fall weist der Topffuß eine Aussparung auf, in welche ein Betätigungselement des Basisgerätes bis zu einem Teilbereich der Verriegelungseinrichtung, nämlich vorzugsweise der Rotationswelle, eingreifen kann. Die Aussparung kann beispielsweise eine Öffnung in einem Gehäuse des Topffußes sein, vorzugsweise an einer unteren Gehäusefläche des Topffußes, wobei ein Weg bis zu der Verriegelungseinrichtung, insbesondere der Rotationswelle, freigegeben ist, so dass das Betätigungselement des Basisgerätes durch die Aussparung des Topffußes hindurch direkt zu der Verriegelungseinrichtung geführt wird, wenn eine Anordnung des Zubereitungsgefäßes an dem Basisgerät erfolgt. Insgesamt kann das Betätigungselement, welches der Betätigung der Verriegelungseinrichtung dient, entweder in dem Basisgerät der Küchenmaschine, oder in dem Zubereitungsgefäß selbst, bevorzugt in dem Topffuß, angeordnet sein.

Es wird vorgeschlagen, dass die Rotationswelle eine zweite Kröpfung aufweist, über welche die Rotationswelle von dem Betätigungselement antreibbar ist. Durch die zweite Kröpfung der Rotationswelle wird ein Abschnitt an der Rotationswelle geschaffen, welcher eine Kraftübertragung von dem Betätigungselement auf die Rotationswelle ermöglicht, um beispielsweise eine Kraft, welche aus einer radialen Richtung auf die Rotationswelle wirkt, in eine Rotation der Rotationswelle umzulenken. Unter Kröpfung wird auch hier wieder ein Versatz entlang der Längserstreckung der Rotationswelle verstanden. Die Kröpfung ermöglicht eine Transformation einer Bewegung des Betätigungselementes in eine Rotationsbewegung der Rotationswelle. Beispielsweise kann das Betätigungselement um eine orthogonal zu der Längserstreckung der Rotationswelle orientierte Schwenkachse schwenkbar sein, so dass das Betätigungselement je nach seiner momentanen Stellung eine Kraft auf die zweite Kröpfung der Rotationswelle ausübt, oder nicht. Alternativ kann das Betätigungselement auch linear relativ zu der zweiten Kröpfung der Rotationswelle verlagert werden.

Insbesondere wird vorgeschlagen, dass das Betätigungselement in einen Rotationsweg der zweiten Kröpfung der Rotationswelle verlagerbar ist, so dass das Betätigungselement die zweite Kröpfung kontaktieren und antreiben kann. Durch die zweite Kröpfung weist die Rotationswelle einen zweiten Teilbereich auf, welcher außerhalb einer Lagerachse, d.h. Rotationsachse, der Rotationswelle liegt. Die zweite Kröpfung weist dadurch einen Rotationsweg auf, welcher um die Lagerachse der Rotationswelle herum verläuft. Das Betätigungselement kann in diesen Rotationsweg eingreifen und die zweite Kröpfung kontaktieren, um eine Verlagerung der zweiten Kröpfung und damit eine Verlagerung des an der ersten Kröpfung der Rotationswelle gelagerten Verriegelungselementes zu erreichen. Durch die mechanische Kraftbeaufschlagung des Betätigungselementes wird die Rotationswelle somit rotiert und damit auch die erste Kröpfung, so dass insgesamt eine Auf- beziehungsweise Abverlagerung des Verriegelungselementes erfolgt und der Deckel mit dem Topf verriegelt werden kann.

Des Weiteren wird vorgeschlagen, dass das Verriegelungselement stabförmig mit einer überwiegenden Längserstreckung ausgebildet ist. Insbesondere wird vorgeschlagen, dass das Verriegelungselement durch eine Wandung des Topfes und/oder einen Handgriff des Topfes geführt ist. Durch die stabförmige Ausgestaltung ist es möglich, ein Verriegelungselement bereitzustellen, welches von der in vorzugsweise dem Topffuß angeordneten Rotationswelle bis zu der Topföffnung ragt. Darüber hinaus kann das stabförmige Verriegelungselement so schlank ausgestaltet werden, dass dieses innerhalb einer Wandung des Topfes und/oder innerhalb des Handgriffs des Topfes zu der Topföffnung geführt werden kann. Damit liegt das Verriegelungselement vorteilhaft nicht außen an einer Wandung des Zubereitungsgefäßes an, sondern ist in das Material des Zubereitungsgefäßes integriert, so dass das Zubereitungsgefäß besonders einfach reinigbar ist und sich der Nutzer nicht an der Verriegelungseinrichtung verletzen kann. In der Wandung des Topfes beziehungsweise in dem Handgriff kann ein Hohlraum vorgesehen sein, innerhalb dessen sich das Verriegelungselement erstreckt. Das Verriegelungselement kann dann im Bereich der Topföffnung auf einen auf dem Topf aufliegenden Deckel einwirken und diesen mit dem Topf verriegeln.

Es wird vorgeschlagen, dass das Verriegelungselement ein Funktionselement aufweist, welches ausgebildet ist, hinter einen Teilbereich des Deckels zu greifen und dadurch eine Verriegelung des Topfes mit dem Deckel zu bewirken. Insbesondere kann das Funktionselement ausgebildet sein, eine Verlagerung des Deckels zu dem Topf hin und/oder ein radial nach außen wirkendes Verspannen des Deckels zu bewirken. Vorzugsweise ist das Funktionselement an einem Endbereich des Verriegelungselementes ausgebildet. Das Funktionselement dient der eigentlichen Verriegelung des Deckels mit dem Topf, wobei das Funktionselement einen Teilbereich des Deckels kontaktiert und dessen Position relativ zu dem Topf verlagert und fixiert. Besonders bevorzugt wirkt das Funktionselement mechanisch so auf den Deckel ein, dass dieser zu dem Topf hingezogen und/oder auf diesen gedrückt wird, beziehungsweise gegebenenfalls zusätzlich auch in Bezug auf eine radiale Richtung (radial in Bezug auf ein Inneres des Topfes) zentriert und verspannt wird. Das Funktionselement kann beispielsweise ein hakenförmig ausgebildetes Element sein, welches hinter einen Hinterschnitt des Deckels, beispielsweise einen an dem Deckel angeordneten Kragen, greift. Bei Verlagerung des Verriegelungselementes mittels der Rotation der Rotationswelle wird ebenfalls das Funktionselement relativ zu dem Topf verlagert, so dass der Deckel entsprechend relativ zu dem Topf verlagert werden und mit diesem verriegelt werden kann. Dem Verriegelungselement, insbesondere dem Funktionselement, kann eine Detektionseinrichtung zugeordnet sein, welche eine momentane Stellung des Verriegelungselementes beziehungsweise des Funktionselementes detektiert und davon ausgehend auf eine ordnungsgemäße Verriegelung des Zubereitungsgefäßes beziehungsweise eine Fehlanwendung schließt, bei welcher der Nutzer den Deckel beispielsweise nicht ordnungsgemäß auf den Topf aufgelegt hat und somit keine optimale Verriegelung erfolgen konnte. Wenn sich kein Deckel auf dem Topf befindet oder der Deckel nicht ordnungsgemäß auf den Topf aufgelegt ist, beispielsweise schräg aufgelegt ist, wird die Bewegung des Verriegelungselementes beziehungsweise des Funktionselementes nicht durch den Deckel begrenzt, so dass die Rotationswelle der Verriegelungseinrichtung eine über ein definiertes Maß hinausgehende Rotationsbewegung ausführen kann. Dies kann durch Positionssensoren, beispielsweise Tastschalter detektiert werden. Ein solcher Positionssensor kann entweder direkt an dem Verriegelungselement beziehungsweise dem Funktionselement angeordnet sein, oder auch an der Rotationswelle beziehungsweise einem Betätigungselement zur Rotation der Rotationswelle. Insgesamt kann die Küchenmaschine somit einen fehlenden oder falsch aufgesetzten Deckel beziehungsweise eine ordnungsgemäße Verriegelung zwischen dem Topf und dem Deckel erkennen. Im Fall einer fehlgeschlagenen Verriegelung kann der Nutzer beispielsweise über ein Display der Küchenmaschine eine Nachricht erhalten, insbesondere auch in Verbindung mit einem Korrekturvorschlag.

Es kann vorgesehen sein, dass der Topf eine Führungseinrichtung zur Führung des Funktionselementes relativ zu dem Deckel aufweist. Beispielsweise kann der Topf eine Führungskulisse aufweisen, innerhalb welcher das Funktionselement des Verriegelungselementes so geführt ist, dass einerseits eine den Deckel freigebende Stellung, und andererseits eine den Deckel verriegelnde Stellung erreicht werden kann. Sofern das Verriegelungselement ohnehin in einer Wandung des Topfes beziehungsweise innerhalb des Handgriffs des Topfes zu der Topföffnung geführt ist, kann die Wandung beziehungsweise der Handgriff im Bereich der Topföffnung eine solche Führungseinrichtung für das Funktionselement aufweisen.

Insbesondere kann vorgesehen sein, dass das Funktionselement elastisch verformbar ist und/oder um eine Schwenkachse des Verriegelungselementes relativ zu einem Grundkörper des Verriegelungselementes schwenkbar ist. Das Verriegelungselement kann somit einen eine überwiegende Längserstreckung aufweisenden Grundkörper aufweisen sowie einen Teilbereich, insbesondere Endbereich, welcher elastisch verformbar und/oder relativ zu dem Grundkörper verschwenkbar ist. Die Form des Verriegelungselementes kann sich somit durch elastische Verformung beziehungsweise Verschwenken des Funktionselementes ändern, wobei das Funktionselement bei Verformung beziehungsweise Verschwenken auf den Deckel zugreifen und diesen mit dem Topf verriegeln kann. Insbesondere wird bevorzugt, dass zumindest das Funktionselement des Verriegelungselementes durch eine Führungseinrichtung des Topfes geführt wird, welche die elastische Verformung des Funktionselementes beziehungsweise das Verschwenken des Funktionselementes relativ zu dem Grundkörper des Verriegelungselementes erzwingt, so dass zumindest zwei definierte Stellungen, nämlich eine nichtverriegelte Stellung und eine verriegelte Stellung, erreicht werden können.

Neben dem zuvor beschriebenen Zubereitungsgefäß wird mit der Erfindung des Weiteren auch eine elektromotorisch betriebene Küchenmaschine, insbesondere ein Mixgerät, vorgeschlagen, welches ein Basisgerät und ein mit einem Aufnahmebereich des Basisgerätes verbindbares Zubereitungsgefäß aufweist, wobei das Zubereitungsgefäß einen Topf und einen eine Topföffnung verschließenden Deckel aufweist, wobei das Zubereitungsgefäß des Weiteren wie gemäß der Erfindung vorgeschlagen ausgebildet ist, und das Basisgerät der Küchenmaschine eine Betätigungseinrichtung aufweist, welche eingerichtet ist, die Verriegelungseinrichtung des Zubereitungsgefäßes im miteinander verbundenen Zustand von Basisgerät und Zubereitungsgefäß zu betätigen. Das Basisgerät der erfindungsgemäßen Küchenmaschine ist erfindungsgemäß mit einer Betätigungseinrichtung ausgestattet, die eingerichtet und ausgebildet ist, die Verriegelungseinrichtung des Zubereitungsgefäßes zu betätigen, das heißt anzutreiben. Die Betätigungseinrichtung weist beispielsweise einen Elektromotor sowie zumindest ein Verbindungselement zur Herstellung einer mechanischen Wirkverbindung zu der Verriegelungseinrichtung des Zubereitungsgefäßes auf. Falls das Zubereitungsgefäß selbst über ein der Verriegelungseinrichtung zugeordnetes Betätigungselement verfügt, welches so an einem Topffuß angeordnet ist, dass das Betätigungselement von der Betätigungseinrichtung der Küchenmaschine betätigt werden kann, ist die Betätigungseinrichtung des Basisgerätes lediglich noch mit dem Betätigungselement des Zubereitungsgefäßes zu koppeln. Dies kann beispielsweise über ein zwischen der Betätigungseinrichtung des Basisgerätes und dem Betätigungselement des Zubereitungsgefäßes angeordnetes Getriebe oder Kupplungselement erreicht werden. Die Anordnung des Betätigungselementes in dem Zubereitungsgefäß selbst hat den Vorteil, dass die von der Rotationswelle auf das Betätigungselement übertragenen Kräfte von dem Topf beziehungsweise dem Topffuß aufgenommen werden und somit nicht in das Basisgerät eingeleitet werden. Die Übertragung der Antriebskraft der Betätigungseinrichtung von dem Basisgerät auf das Betätigungselement erfolgt dann beispielsweise über eine trennbare Kupplung, beispielsweise in Form eine Vielzahns, beispielsweise eines Zahnrades oder ähnlichem.

Alternativ kann vorgesehen sein, dass das Zubereitungsgefäß kein Betätigungselement zur Betätigung der Verriegelungseinrichtung aufweist. In diesem Fall ist das Betätigungselement ein Element der Betätigungseinrichtung des Basisgerätes und der Topffuß des Zubereitungsgefäßes weist eine korrespondierende Aussparung auf, in welche das Betätigungselement des Basisgerätes eingebracht werden kann, um die Verriegelungseinrichtung mechanisch mit dem Betätigungselement des Basisgerätes zu koppeln. Der Topffuß weist vorzugsweise an der zu dem Basisgerät gewandten Seite, das heißt vorzugsweise einer im Wesentlichen horizontal orientierten Bodenfläche, Öffnungen zum Hindurchgreifen des Betätigungselementes des Basisgerätes auf. Durch diese Öffnungen hindurch kann das Betätigungselement dann auf die Verriegelungseinrichtung des Zubereitungsgefäßes einwirken.

Wenn die Betätigungseinrichtung des Basisgerätes ein Betätigungselement aufweist, dass bei ordnungsgemäß mit dem Zubereitungsgefäß verbundenem Zustand des Basisgerätes so in eine Aussparung des Topffußes des Zubereitungsgefäßes ragt, dass die Verriegelungseinrichtung des Zubereitungsgefäßes mittels des Betätigungselementes des Basisgerätes betätigbar ist, kann das Betätigungselement des Weiteren gleichzeitig zur Fixierung des Zubereitungsgefäßes an dem Basisgerät der Küchenmaschine dienen. Bei dieser Ausgestaltung greift das Betätigungselement des Basisgerätes vorteilhaft hinter einen Hinterschnitt des Zubereitungsgefäßes, so dass das Zubereitungsgefäß nicht mehr von dem Basisgerät getrennt werden kann.

Um eine Rückstellung des Verriegelungselementes beziehungsweise des Funktionselementes des Verriegelungselementes zu erreichen, wenn eine mechanische Krafteinwirkung des Betätigungselementes auf die Verriegelungseinrichtung entfällt, kann vorteilhaft eine Rückstellfeder zum Einsatz kommen. Die Rückstellfeder kann an verschiedenen Positionen innerhalb des Zubereitungsgefäßes positioniert werden und beispielsweise auf das Verriegelungselement, die Rotationswelle oder das Betätigungselement einwirken. Beispielsweise kann eine Rückstellfeder an dem Topffuß gelagert sein und auf die zweite Kröpfung der Rotationswelle derart einwirken, dass die Rückstellkraft der Rückstellfeder die Rotationswelle in eine Rotationsstellung zu rotieren sucht, welche der entriegelten Stellung des Verriegelungselementes beziehungsweise des Funktionselementes des Verriegelungselementes entspricht. Eine solche Rückstellfeder kann beispielsweise eine Schenkelfeder sein, deren Schenkel auf die Rotationswelle einwirkt.

### Kurze Beschreibung der Zeichnungen

Im Folgenden wird die Erfindung anhand von Ausführungsbeispielen näher erläutert. Es zeigen:
- Fig. 1: eine Küchenmaschine mit einem Zubereitungsgefäß,
- Fig. 2: ein Zubereitungsgefäß und ein Basisgerät einer Küchenmaschine in einem Längsschnitt, wobei sich eine Verriegelungseinrichtung zur Verriegelung eines Deckels des Zubereitungsgefäßes in einer Freigabestellung befindet,
- Fig. 3: einen Topffuß des Zubereitungsgefäßes gemäß Figur 2 in einem Querschnitt,
- Fig. 4: das Zubereitungsgefäß und das Basisgerät gemäß Figur 2 mit der Verriegelungseinrichtung in einer Verriegelungsstellung,
- Fig. 5: den Topffuß des Verriegelungsgefäßes gemäß Figur 4 in einem Querschnitt,
- Fig. 6: eine Darstellung des Wirkprinzips einer Selbsthemmung der Verriegelungseinrichtung in der Verriegelungsstellung,
- Fig. 7: einen Topffuß des Zubereitungsgefäßes mit einer Rückstellfeder für die Verriegelungseinrichtung,
- Fig. 8: Darstellung eines Wirkprinzips einer Detektionseinrichtung zur Erkennung eines nicht verschlossenen Zubereitungsgefäßes,
- Fig. 9: einen Topffuß gemäß Figur 8 in einem Querschnitt,
- Fig. 10: einen Topffuß eines Zubereitungsgefäßes gemäß einer weiteren Ausführungsform in einer Freigabestellung der Verriegelungseinrichtung,
- Fig. 11: den Topffuß gemäß Figur 10 in einer Verriegelungsstellung der Verriegelungseinrichtung.

### Beschreibung der Ausführungsformen

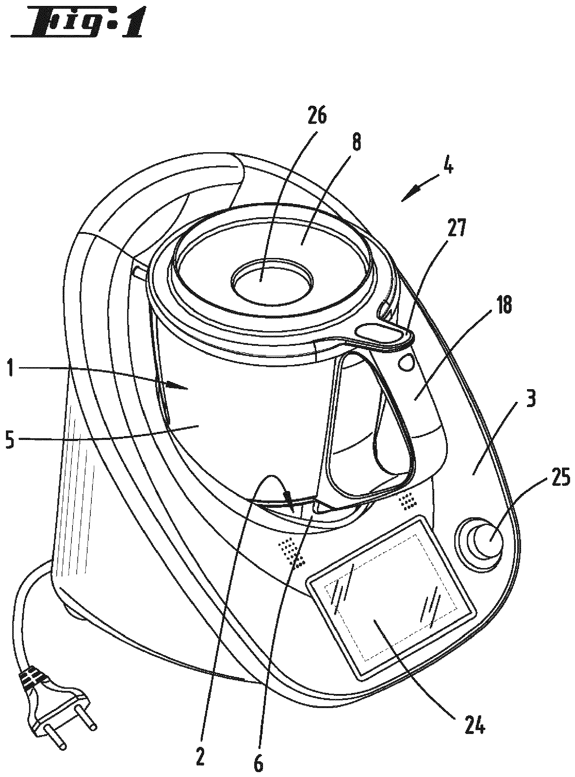

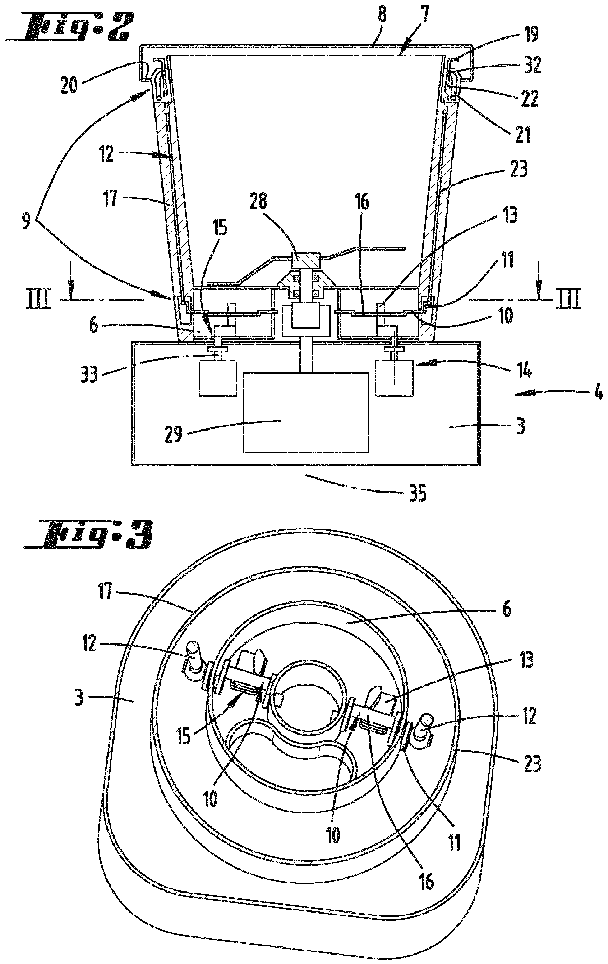

Figur 1 zeigt lediglich beispielhaft eine Küchenmaschine 4 mit einem Basisgerät 3, welches einen Aufnahmebereich 2 zur Verbindung mit einem Zubereitungsgefäß 1 aufweist. Das Basisgerät 3 der Küchenmaschine 4 verfügt über ein Display 24 zum Anzeigen von Funktionen der Küchenmaschine 4 und gegebenenfalls Rezepten, welche mittels der Küchenmaschine 4 zubereitet werden können. Neben dem Display 24 befindet sich ein Schalter 25, welcher einerseits zum Ein- und Ausschalten der Küchenmaschine 4, und andererseits zum Bestätigen von Eingabebefehlen oder ähnlichem dient. Das Zubereitungsgefäß 1 weist einen Topf 5 mit einem Handgriff 18 und einem Topffuß 6 auf, welcher zur Verbindung mit dem Aufnahmebereich 2 der Küchenmaschine 4 dient, sowie einen Deckel 8 mit einer Deckelöffnung 26 und einem Deckelgriff 27. Durch die Deckelöffnung 26 hindurch können beispielsweise Zutaten in den Topf 5 des Zubereitungsgefäßes 1 eingegeben werden. Das Basisgerät 3 kann - entgegen des hier gezeigten Beispiels - auch flach, beispielsweise als Platte, ausgebildet sein, so dass dieses optional in eine Küchenschublade oder dergleichen passt (siehe beispielsweise Figur 2).

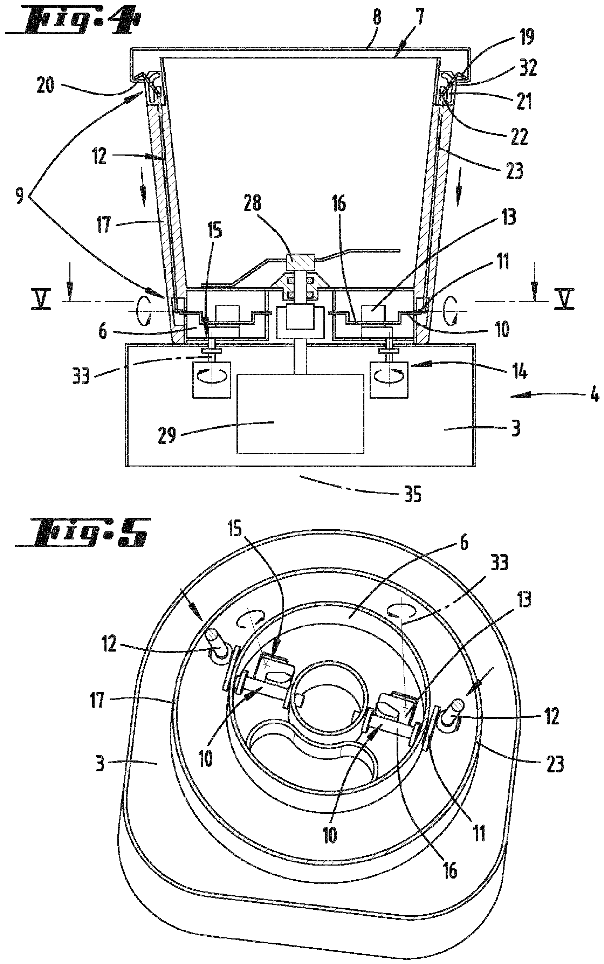

Figur 2 zeigt eine Skizze eines plattenförmigen Basisgerätes 3 einer Küchenmaschine 4 mit einem damit verbundenen Zubereitungsgefäß 1. Das Zubereitungsgefäß 1 weist hier beispielhaft zwei Verriegelungseinrichtungen 9 auf, welche sich bezogen auf eine Längsachse 35 des Zubereitungsgefäßes 1 gegenüberliegen. Die Verriegelungseinrichtungen 9 dienen zur Verriegelung des Deckels 8 mit dem Topf 5 an gegenüberliegenden Umfangsabschnitten einer Topföffnung 7 des Topfes 5. Hier sind beispielhaft zwei Verriegelungseinrichtungen 9 gezeigt, wobei ein erfindungsgemäßes Zubereitungsgefäß 1 jedoch auch nur eine einzige Verriegelungseinrichtung 9 oder mehr als zwei Verriegelungseinrichtungen 9 aufweisen könnte. Die Verriegelungseinrichtung 9 weist im Einzelnen eine Rotationswelle 10 mit einer ersten Kröpfung 11 und einer zweiten Kröpfung 16 auf. An der ersten Kröpfung 11 ist ein Verriegelungselement 12 in Form einer Verriegelungsstange gelagert, welches einen Grundkörper 23 und ein endseitiges Funktionselement 19 aufweist. Das Funktionselement 19 ist über eine Schwenkachse 22 schwenkbeweglich mit dem Grundkörper 23 des Verriegelungselementes 12 verbunden. Das Funktionselement 19 ist hier beispielsweise hakenförmig ausgebildet, um in einem verschwenkten Zustand (siehe Figur 4) hinter einen korrespondierenden Teilbereich 20 des Deckels 8 zu schwenken. Der korrespondierende Teilbereich 20 ist hier beispielsweise ein an dem Deckel 8 ausgebildeter Kragen. Das Verriegelungselement 12 ist durch eine Wandung 17 des Topfes 5 geführt, nämlich ausgehend von der ersten Kröpfung 11 der Rotationswelle 10 zu der Topföffnung 7 des Topfes 5. In der Wandung 17 des Topfes 5 ist des Weiteren eine Führungseinrichtung 21 in Form einer Führungskulisse ausgebildet, innerhalb welcher ein Führungsstift 32 des Funktionselementes 19 geführt ist. Bei einer Rotation der Rotationswelle 10 kommt es zu einer Auf- und Ab-Bewegung des Verriegelungselementes 12, welches an der ersten Kröpfung 11 der Rotationswelle 10 gelagert ist. Bei der Auf- und Ab-Bewegung wird der Führungsstift 32 entlang der Führungseinrichtung 21 relativ zu dem Topf 5 verlagert, was zu einem Verschwenken des Funktionselementes 19 um die Schwenkachse 22 führt, nämlich so, dass das Funktionselement 19 von der in Figur 2 dargestellten Freigabestellung in die in Figur 4 dargestellte Verriegelungsstellung verschwenkt wird. Die Rotation der Rotationswelle 10 wird durch ein Betätigungselement 13 einer Betätigungseinrichtung 14 des Basisgerätes 3 der Küchenmaschine 4 erzwungen. Das Betätigungselement 13 greift durch eine Aussparung 15 des Topffußes 6 des Zubereitungsgefäßes 1 hindurch und steht in Kontakt mit der zweiten Kröpfung 16 der Rotationswelle 10. Das Betätigungselement 13 des Basisgerätes 3 ist hier mittels einer Betätigungseinrichtung 14 der Küchenmaschine 4, nämlich mittels eines Elektromotors, um eine Rotationsachse 33 rotierbar, die orthogonal zu einer Längserstreckung der Rotationswelle 10 orientiert ist.

Die Figuren 2 und 3 zeigen eine Freigabestellung der Verriegelungseinrichtung 9 des Zubereitungsgefäßes 1, bei welcher der Deckel 8 lediglich auf dem Topf 5 aufliegt, jedoch nicht mit dem Topf 5 verriegelt ist. Die Figuren 4 und 5 zeigen demgegenüber eine Verriegelungsstellung der Verriegelungseinrichtung 9, bei welcher das Funktionselement 19 hinter den Teilbereich 20 des Deckels 8 greift und den Deckel 8 somit gegenüber dem Topf 5 verriegelt. Die Figuren 3 und 5 zeigen dabei jeweils eine perspektivische Draufsicht auf den Topffuß 6 des Zubereitungsgefäßes 1 in einem Querschnitt. Unter dem Topffuß 6 befindet sich das Basisgerät 3 der Küchenmaschine 4. Zu erkennen sind die durch Aussparungen 15 des Topffußes 6 in den Topffuß 6 hineinragenden Betätigungselemente 13, welche in Kontakt mit jeweils einer zweiten Kröpfung 16 einer Rotationswelle 10 stehen. Jede Rotationswelle 10 gehört dabei zu einer von zwei Verriegelungseinrichtungen 9 des Zubereitungsgefäßes 1. In der in den Figuren 2 und 3 dargestellten Freigabestellung der Verriegelungseinrichtung 9 weist die zweite Kröpfung 16 jeder Verriegelungseinrichtung 9 im Wesentlichen in eine horizontale Richtung, die in einer aufrechten Stellung der Küchenmaschine 4 parallel zu einem Kontaktbereich zwischen dem Zubereitungsgefäß 1 und dem Basisgerät 3 orientiert ist. Die erste Kröpfung 11 steht hier demgegenüber beispielsweise im Wesentlichen orthogonal zu der zweiten Kröpfung 16 und weist somit beispielsweise in eine vertikale Richtung, so dass das Verriegelungselement 12 maximal in Richtung der Topföffnung 7 verlagert ist und sich der Führungsstift 32 des Funktionselementes 19 in der oberen Endlage der Führungseinrichtung 21 befindet. Dadurch ist das Funktionselement 19 von dem Teilbereich 20 des Deckels 8 entfernt und ein Abnehmen des Deckels 8 von dem Topf 5 möglich. Wenn das Betätigungselement 13 der Betätigungseinrichtung 14 der Küchenmaschine 4 nun rotiert wird, drückt dieses die zweite Kröpfung 16 ausgehend von der in Figur 3 dargestellten Freigabestellung in die in Figur 5 dargestellte Verriegelungsstellung. In der Verriegelungsstellung weist die zweite Kröpfung 16 hier beispielsweise nach unten in eine im Wesentlichen vertikale Richtung. Die erste Kröpfung 11 steht im Wesentlichen horizontal. Dies führt - wie in Figur 4 veranschaulicht - zu einer Verlagerung des in der Führungseinrichtung 21 geführten Führungsstiftes 32 des Funktionselementes 19 nach unten, wodurch das Funktionselement 19 relativ zu dem Grundkörper 23 des Verriegelungselementes 12 um die Schwenkachse 22 verschwenkt wird. Dadurch kommt es zu einem Hintergreifen des Teilbereiches 20 des Deckels 8 durch das Funktionselement 19 der Verriegelungseinrichtung 9. Das Funktionselement 19 zieht den Deckel 8 dabei auf den Topf 5 und sorgt gleichzeitig für eine radiale Verspannung des Deckels 8 relativ zu dem Topf 5. Durch die beiden gegenüberliegenden Verriegelungseinrichtungen 9 entlang des Umfangs der Topföffnung 7 kommt es zu einer Zentrierung des Deckels 8 gegenüber der Topföffnung 7. Die in den Figuren 2 bis 5 dargestellten Orientierungen der ersten Kröpfung 11 und der zweiten Kröpfung 16 der Rotationswelle 10 sind lediglich beispielhaft. Es ist nicht erforderlich, dass die erste Kröpfung 11 und die zweite Kröpfung 16 orthogonal zueinander orientiert sind. Vielmehr kann der Winkel zwischen den Kröpfungen 11, 16 an die gewünschte Stellbewegung des Verriegelungselementes 12 angepasst werden.

Obwohl dies in dem gezeigten Ausführungsbeispiel nicht der Fall ist, kann das Betätigungselement 13 der Verriegelungseinrichtung 9 darüber hinaus ein Element des Zubereitungsgefäßes 1, nämlich beispielsweise des Topffußes 6, sein. In diesem Fall befindet sich zwischen der Betätigungseinrichtung 14 des Basisgerätes 3 und dem Betätigungselement 13 des Zubereitungsgefäßes 1 dann eine Kupplung, beispielsweise ein Zahnradgetriebe, um die Antriebsbewegung der Betätigungseinrichtung 14 auf das Betätigungselement 13 des Zubereitungsgefäßes 1 zu übertragen. Wenn wie in den Figuren dargestellt zwei oder mehr Rotationswellen 10 innerhalb des Zubereitungsgefäßes 1 zum Einsatz kommen, können die zugehörigen Betätigungselemente 13 darüber hinaus entweder durch separate Betätigungseinrichtungen 14 oder durch eine zentrale Betätigungseinrichtung 14 des Basisgerätes 3 bewegt werden. Sofern eine zentrale Betätigungseinrichtung 14 vorgesehen ist, kann die Antriebskraft mittels eines Getriebes innerhalb des Basisgerätes 3 auf die einzelnen Betätigungselemente 13 übertragen werden. Dies kann zum Beispiel über ein Stangengetriebe, einen Seilzug oder einen Riementrieb erfolgen.

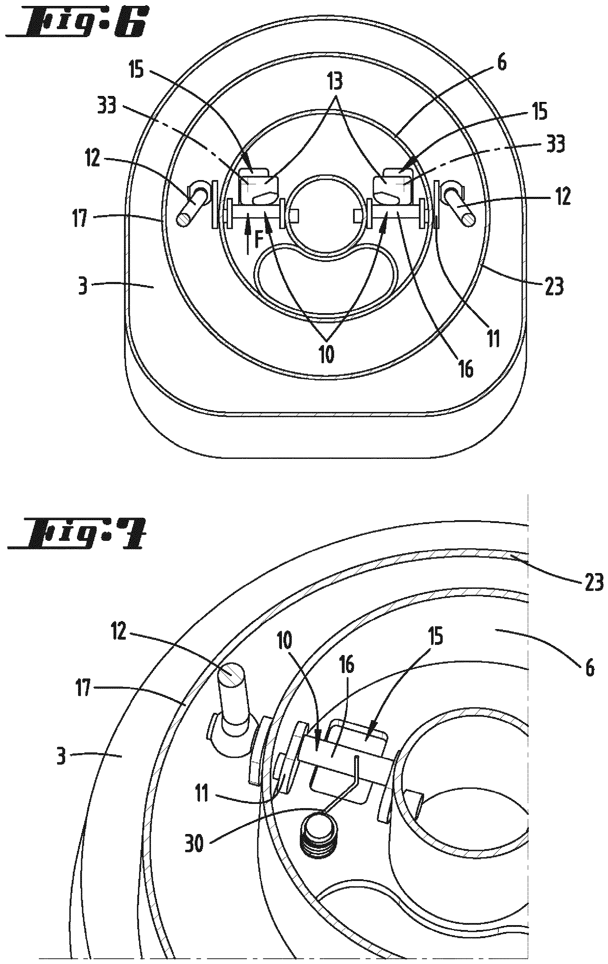

Figur 6 verdeutlicht eine selbsthemmende Wirkung der in Figur 4 dargestellten Verriegelungsstellung der Verriegelungseinrichtung 9. Wie bereits erläutert, ist das Betätigungselement 13 um die Rotationsachse 33 rotierbar. Gleichzeitig ist eine Wirkrichtung der von der Rotationswelle 10 ausgeübten resultierenden Kraft F so orientiert, dass die wirkende Kraft F durch die Rotationsachse 33 des Betätigungselementes 13 verläuft. Durch diese Ausgestaltung wird eine selbsthemmende Wirkung erreicht, welche bewirkt, dass der Deckel 8 auch dann sicher auf dem Topf 5 verriegelt bleibt, wenn er mit großen Kräften beaufschlagt wird, beispielsweise bei einem Rühren von Flüssigkeiten mit hoher Drehzahl innerhalb des Topfes 5. Die geometriebedingte Selbsthemmung führt dazu, dass das Betätigungselement 13 nicht von der Rotationswelle 10 verschwenkt werden kann. Die Rotationswelle 10 und das Betätigungselement 13 verharren somit in der Verriegelungsstellung und halten den Deckel 8 sicher auf dem Topf 5 verriegelt.

Figur 7 zeigt eine Rückstellfeder 30, die an dem Topffuß 6 gelagert ist und mit einem Schenkel gegen die zweite Kröpfung 16 der Rotationswelle 10 drückt. Die Rückstellfeder 30 dient der Rückstellung der Rotationswelle 10 und damit auch des Verriegelungselementes 12 der Verriegelungseinrichtung 9 in eine Freigabestellung, wenn das Betätigungselement 13 von der Betätigungseinrichtung 14 des Basisgerätes 3 in eine Freigabestellung bewegt wird. Die Rückstellfeder 30 könnte alternativ auch auf das Betätigungselement 13 oder das Verriegelungselement 12 wirken.

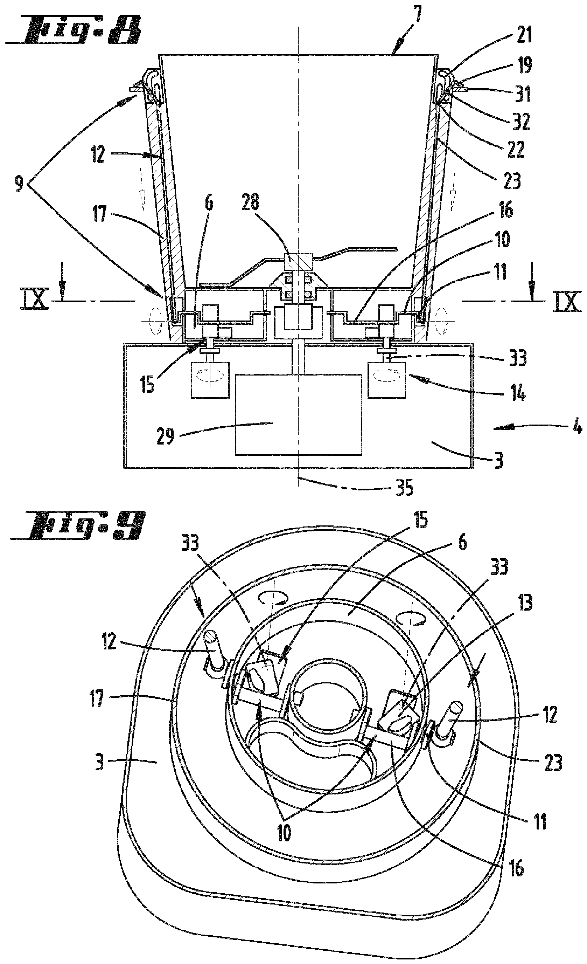

Die Figuren 8 und 9 zeigen beispielhaft ein Zubereitungsgefäß 1 mit einer Detektionseinrichtung 31 zum Detektieren einer Fehlanwendung des Zubereitungsgefäßes 1, bei welcher der Topf 5 nicht mittels eines Deckels 8 verschlossen wurde. Die Detektionseinrichtung 31 ist hier beispielsweise im Bereich der Führungseinrichtung 21 für das Funktionselement 19 des Verriegelungselementes 12 angeordnet und ausgebildet, eine aktuelle Stellung des Funktionselementes 19 innerhalb der Führungseinrichtung 21 zu detektieren, nämlich die in Figur 8 dargestellte Fehlerstellung, bei welcher der Führungsstift 32 des Funktionselementes 19 über eine definierte Stellung hinaus innerhalb der Führungseinrichtung 21 verlagert ist. Wenn die Verriegelungseinrichtung 9 betätigt wird, ohne dass sich der Deckel 8 auf dem Topf 5 befindet, kann das Funktionselement 19 über die definierte Stellung hinaus verlagert werden, da der Teilbereich 20 des Deckels 8 die Bewegung des Funktionselementes 19 der Verriegelungseinrichtung 9 nicht begrenzt. In dem Fall kontaktiert der freie Endbereich des Funktionselementes 19 die Betätigungseinrichtung 31. Bei der gezeigten Fehlerstellung können des Weiteren auch sowohl die Rotationswelle 10, als auch das Betätigungselement 13 eine größere Rotationsbewegung als üblich ausführen (siehe Figur 9). Dies kann alternativ auch durch Sensoren, beispielsweise Tastschalter, im Bereich der Rotationswelle 10 beziehungsweise des Betätigungselementes 13 detektiert werden. Eine detektierte Fehlanwendung kann dem Nutzer beispielsweise auf dem Display 24 der Küchenmaschine 4 angezeigt werden. Sodann kann der Nutzer in geeigneter Weise reagieren.

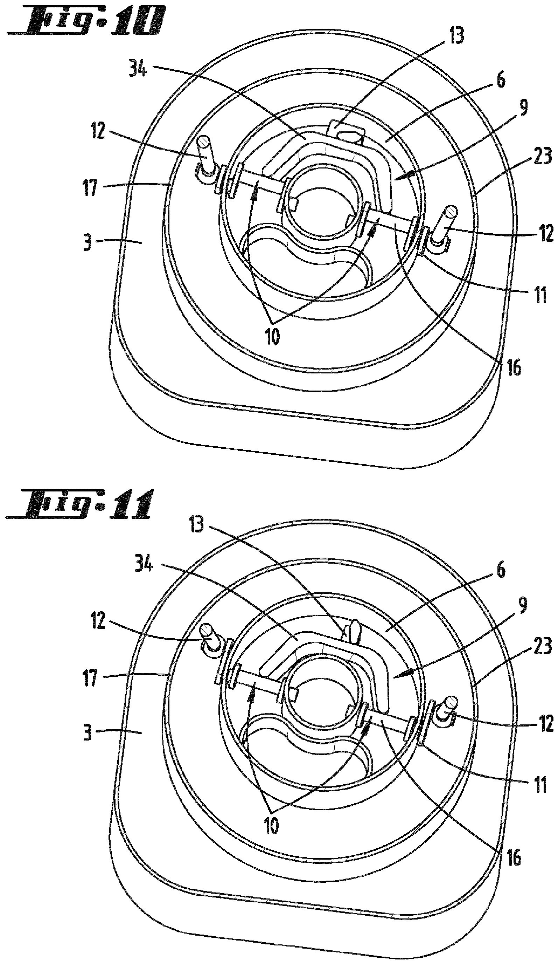

Die Figuren 10 und 11 zeigen eine weitere Ausführungsform einer erfindungsgemäßen Verriegelungseinrichtung 9 eines Zubereitungsgefäßes 1, bei welcher zwei Rotationswellen 10 der Verriegelungseinrichtung 9 über ein gemeinsames Betätigungselement 13 angetrieben werden. Das Betätigungselement 13 wirkt gegen ein bügelförmiges Kopplungselement 34, welches die Kraft des Betätigungselementes 13 auf beide Rotationswellen 10 überträgt. Das Kopplungselement 34 ist dazu linear verschiebbar an dem Topffuß 6 gelagert. Figur 10 zeigt eine Verriegelungsstellung der Verriegelungseinrichtung 9, während Figur 11 entsprechend eine Freigabestellung der Verriegelungseinrichtung 9 verdeutlicht.

**Liste der Bezugszeichen**

| | | | |
|---|---|---|---|
| 1 | Zubereitungsgefäß | 29 | Rührwerksantrieb |
| 2 | Aufnahmebereich | 30 | Rückstellfeder |
| 3 | Basisgerät | 31 | Detektionseinrichtung |
| 4 | Küchenmaschine | 32 | Führungsstift |
| 5 | Topf | 33 | Rotationsachse |
| 6 | Topffuß | 34 | Kopplungselement |
| 7 | Topföffnung | 35 | Längsachse |
| 8 | Deckel | | |
| 9 | Verriegelungseinrichtung | | |
| 10 | Rotationswelle | F | Kraft |
| 11 | Erste Kröpfung | | |
| 12 | Verriegelungselement | | |
| 13 | Betätigungselement | | |
| 14 | Betätigungseinrichtung | | |
| 15 | Aussparung | | |
| 16 | Zweite Kröpfung | | |
| 17 | Wandung | | |
| 18 | Handgriff | | |
| 19 | Funktionselement | | |
| 20 | Teilbereich | | |
| 21 | Führungseinrichtung | | |
| 22 | Schwenkachse | | |
| 23 | Grundkörper | | |
| 24 | Display | | |
| 25 | Schalter | | |
| 26 | Deckelöffnung | | |
| 27 | Deckelgriff | | |
| 28 | Rührwerk | | |

## Patentansprüche

1. Zubereitungsgefäß (1) zum Verbinden mit einem Aufnahmebereich (2) eines Basisgerätes (3) einer elektromotorisch betriebenen Küchenmaschine (4), wobei das Zubereitungsgefäß (1) einen Topf (5), einen mit dem Aufnahmebereich (2) verbindbaren Topffuß (6) und einen eine Topföffnung (7) des Topfes (5) verschließenden Deckel (8) aufweist, **dadurch gekennzeichnet, dass** das Zubereitungsgefäß (1) eine Verriegelungseinrichtung (9) zum Verriegeln des Topfes (5) mit dem Deckel (8) aufweist, wobei die Verriegelungseinrichtung (9) eine Rotationswelle (10) mit einer ersten Kröpfung (11) aufweist, an welcher ein durch Rotation der Rotationswelle (10) auf und ab verlagerbares Verriegelungselement (12) gelagert und zu der Topföffnung (7) geführt ist.

2. Zubereitungsgefäß (1) nach Anspruch 1, **dadurch gekennzeichnet, dass** der Verriegelungseinrichtung (9) ein Betätigungselement (13) zugeordnet ist, welches so an dem Topffuß (6) angeordnet ist, dass das Betätigungselement (13) von einer korrespondierenden Betätigungseinrichtung (14) der Küchenmaschine (4) betätigbar ist, oder dass der Topffuß (6) eine Aussparung (15) aufweist, in welche ein Betätigungselement (13) des Basisgerätes (3) der Küchenmaschine (4) bei ordnungsgemäß mit dem Basisgerät (3) verbundenem Zubereitungsgefäß (1) so einbringbar ist, dass die Verriegelungseinrichtung (9) des Zubereitungsgefäßes (1) von dem Betätigungselement (13) des Basisgerätes (3) betätigbar ist.

3. Zubereitungsgefäß (1) nach Anspruch 2, **dadurch gekennzeichnet, dass** die Rotationswelle (10) eine zweite Kröpfung (16) aufweist, über welche die Rotationswelle (10) von dem Betätigungselement (13) antreibbar ist.

4. Zubereitungsgefäß (1) nach Anspruch 3, **dadurch gekennzeichnet, dass** das Betätigungselement (13) in einen Rotationsweg der zweiten Kröpfung (16) der Rotationswelle (10) verlagerbar ist, so dass das Betätigungselement (13) die zweite Kröpfung (16) kontaktieren und antreiben kann.

5. Zubereitungsgefäß (1) nach einem der vorhergehenden Ansprüche, **dadurch gekennzeichnet, dass** das Verriegelungselement (12) stabförmig mit einer überwiegenden Längserstreckung ausgebildet ist, wobei das Verriegelungselement (12) insbesondere durch eine Wandung (17) des Topfes (5) und/oder einen Handgriff (18) des Topfes (5) geführt ist.

6. Zubereitungsgefäß (1) nach einem der vorhergehenden Ansprüche, **dadurch gekennzeichnet, dass** das Verriegelungselement (12) ein Funktionselement (19) aufweist, welches ausgebildet ist, hinter einen Teilbereich (20) des Deckels (8) zu greifen und dadurch eine Verriegelung des Topfes (5) mit dem Deckel (8) zu bewirken, wobei das Funktionselement (19) insbesondere ausgebildet ist, eine Verlagerung des Deckels (8) zu dem Topf (5) hin und/oder ein radial nach außen wirkendes Verspannen des Deckels (8) zu bewirken.

7. Zubereitungsgefäß (1) nach Anspruch 6, **dadurch gekennzeichnet, dass** der Topf (5) eine Führungseinrichtung (21) zur Führung des Funktionselementes (19) relativ zu dem Deckel (8) aufweist.

8. Zubereitungsgefäß (1) nach Anspruch 6 oder 7, **dadurch gekennzeichnet, dass** das Funktionselement (19) elastisch verformbar ist und/oder um eine Schwenkachse (22) des Verriegelungselementes (12) relativ zu einem Grundkörper (23) des Verriegelungselementes (12) schwenkbar ist.

9. Elektromotorisch betriebene Küchenmaschine (4), insbesondere Mixgerät, mit einem Basisgerät (3) und einem mit einem Aufnahmebereich (2) des Basisgerätes (3) verbindbaren Zubereitungsgefäß (1), welches einen Topf (5) und einen eine Topföffnung (7) verschließenden Deckel (8) aufweist, **dadurch gekennzeichnet, dass** das Zubereitungsgefäß (1) nach einem der vorhergehenden Ansprüche ausgebildet ist, und dass das Basisgerät (3) eine Betätigungseinrichtung (14) aufweist, welche eingerichtet ist, die Verriegelungseinrichtung (9) des Zubereitungsgefäßes (1) im miteinander verbundenen Zustand von Basisgerät (3) und Zubereitungsgefäß (1) zu betätigen.

10. Elektromotorisch betriebene Küchenmaschine (4) nach Anspruch 9, **dadurch gekennzeichnet, dass** die Betätigungseinrichtung (14) des Basisgerätes (3) ein Betätigungselement (13) aufweist, welches bei ordnungsgemäß mit dem Zubereitungsgefäß (1) verbundenem Zustand des Basisgerätes (3) so in eine Aussparung (15) des Topffußes (6) des Zubereitungsgefäßes (1) ragt, dass die Verriegelungseinrichtung (9) des Zubereitungsgefäßes (1) mittels des Betätigungselementes (13) des Basisgerätes (3) betätigbar ist.
